# EUROPÄISCHE PATENTANMELDUNG

(11) **EP 1 719 986 A1**
(43) Veröffentlichungstag der Anmeldung: **08.11.2006**
(21) Anmeldenummer: 06112169.5
(22) Anmeldetag: 03.04.2006
(51) Int. Cl.: G01F 23/60, G01F 23/00

(54) **Vorrichtung mit einem Schwimmer zur Messung eines Füllstandes einer Flüssigkeit in einem Behälter**

(30) Priorität: 04.05.2005 DE 102005020787
(71) Anmelder: ROBERT BOSCH GMBH, 70442 Stuttgart (DE)
(72) Erfinder: Posselt, Andreas, 75417 Muehlacker (DE); Windbergs, Thor, 71732 Tamm (DE); Lorenz, Marko, 71723, Grossbottwar (DE); Friedle, Susanne, 74626 Bretzfeld (DE); Gutscher, Andreas, 71706, Markgroeningen (DE)

(57) **Zusammenfassung**

Bekannte Vorrichtungen zur Messung eines Füllstandes haben einen Meßkanal, in dem ein Schwimmer axial beweglich gelagert ist. Der Füllstand im Meßkanal und damit im Behälter wird mittels eines Ultraschallsensors ermittelt. Nachteilig ist, dass die Herstellungskosten dieser Vorrichtung bisher noch sehr hoch sind.

Die erfindungsgemäße Vorrichtung erreicht eine kostengünstigere Füllstandsmessung.

Erfindungsgemäß ist vorgesehen, dass der Schwimmer (3) über ein Federelement (11) zumindest mittelbar mit einem Sensor (12) verbunden ist, mittels dem der Füllstand (4) durch Ermittlung einer mit der Dehnung des Federelementes (11) korrelierenden Meßgröße bestimmbar ist.

## Beschreibung

### Stand der Technik

Die Erfindung geht aus von einer Vorrichtung zur Messung eines Füllstandes nach der Gattung des Hauptanspruchs.
Es ist schon eine Vorrichtung zur Messung eines Füllstandes in einem Behälter aus der EP 1081471 A1 bekannt, mit einem Meßkanal, in dem ein Schwimmer axial beweglich gelagert ist. Der Füllstand im Meßkanal und damit im Behälter wird mittels eines Ultraschallsensors ermittelt. Nachteilig ist, dass die Herstellungskosten dieser Vorrichtung bisher noch sehr hoch sind.

### Vorteile der Erfindung

Die erfindungsgemäße Vorrichtung zur Messung eines Füllstandes mit den kennzeichnenden Merkmalen des Hauptanspruchs hat demgegenüber den Vorteil, daß auf einfache Art und Weise eine kostengünstigere Füllstandsmessung erreicht wird, indem der Schwimmer über ein Federelement zumindest mittelbar mit einem Sensor verbunden ist, mittels dem der Füllstand durch Ermittlung einer mit der Dehnung des Federelementes korrelierenden Meßgröße bestimmbar ist.

Durch die in den Unteransprüchen aufgeführten Maßnahmen sind vorteilhafte Weiterbildungen und Verbesserungen der im Hauptanspruch angegebenen Vorrichtung möglich.

Besonders vorteilhaft ist, wenn der Sensor als ein Dehnungsmeßstreifen oder als ein piezoelektrischer Sensor ausgeführt ist, da diese Ausführung besonders kostengünstig ist.

Nach einer vorteilhaften Ausgestaltung ist vorgesehen, den Sensor an einer Bodenwandung des Behälters oder am Meßkanal anzuordnen.

Sehr vorteilhaft ist es, wenn das Federelement als Zugfeder und/oder Schraubenfeder ausgebildet ist, da diese Federelemente besonders gut für die mechanische Verbindung mit dem Schwimmer geeignet sind.

### Zeichnung

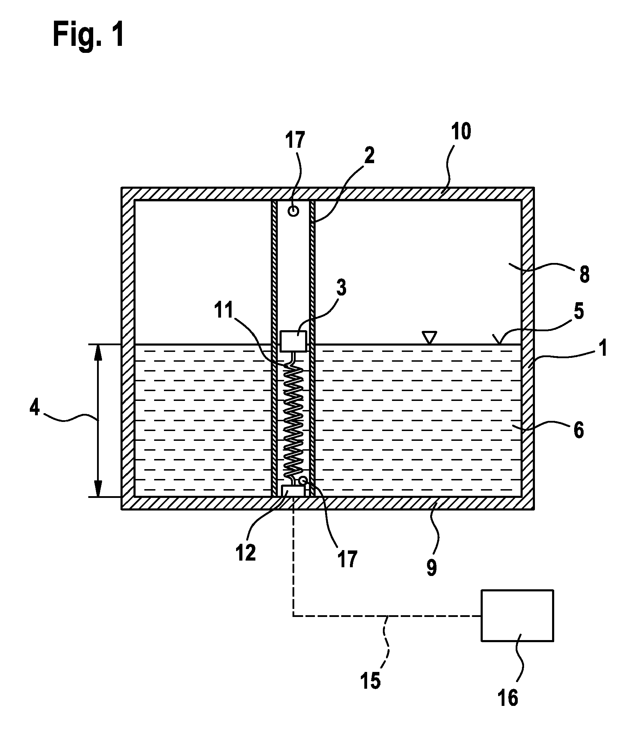

Ein Ausführungsbeispiel der Erfindung ist in der Zeichnung vereinfacht dargestellt und in der nachfolgenden Beschreibung näher erläutert.

### Beschreibung des Ausführungsbeispiels

Die Zeichnung zeigt eine erfindungsgemäße Vorrichtung zur Messung eines Füllstandes in einem Behälter, insbesondere in einem Kraftstoffbehälter eines Kraftfahrzeugs.
Die Vorrichtung ist aber ausdrücklich nicht beschränkt auf die Füllstandsmessung in einem Kraftstoffbehälter. Die Vorrichtung kann den Füllstand einer beliebigen Flüssigkeit in jeder Art von Behälter messen.

Die Vorrichtung ist in einem Behälter 1, beispielsweise einem Kraftstoffbehälter 1, angeordnet und weist einen Meßkanal 2 auf, in dem ein sogenannter Schwimmer 3 in Richtung einer Längserstreckung des Meßkanals 2 beweglich angeordnet und geführt ist.

In dem Behälter 1 befmdet sich eine beliebige Flüssigkeit 6, beispielsweise Kraftstoff, mit einem Füllstand 4. Auf der Höhe des Füllstands 4 befindet sich der Flüssigkeitsspiegel 5 als Grenzfläche zwischen der Flüssigkeit 6 und einem darüber liegenden Leervolumen 8, das beispielsweise mit einem Gasgemisch bestehend aus Luft und verflüchtigter Flüssigkeit ausgefüllt ist.

Der Behälter 1 kann eine beliebige Form haben und beispielsweise als Satteltank oder Mehrkammertank ausgebildet sein.

Der Meßkanal 2 ist beispielsweise hohlzylinderförmig ausgeführt. Der Durchmesser des Schwimmers 3 ist geringer als der Innendurchmesser des Meßkanals 2.
Der Meßkanal 2 verläuft in dem Behälter 1 beispielsweise von einer Bodenwandung 9 bis an eine Deckenwandung 10 des Behälters 1. Der Meßkanal 2 ist beispielsweise an die Bodenwandung 9 und/oder an die Deckenwandung 10 des Behälters 1 geklebt, angespritzt, geclipst, gesteckt oder angeschweißt.

Der Meßkanal 2 ist über zumindest zwei Verbindungsöffnungen 17 mit dem Behälter 1 strömungsverbunden, so dass sich die Füllstände im Behälter 1 und im Meßkanal 2 ausgleichen und im stationären Zustand zumindest nahezu gleich sind. Zumindest eine der Verbindungsöffnungen 17 ist nahe der Bodenwandung 9 zum Flüssigkeitsaustausch und zumindest eine andere Verbindungsöffnung 17 ist nahe der Deckenwandung 10 zum Gasaustausch bzw. Druckausgleich vorgesehen. Es kann aber auch eine Vielzahl von Verbindungsöffnungen 17 vorgesehen sein, die über die gesamte Länge des Meßkanals 2 verteilt angeordnet sind und zusätzlich als Filter wirken, so dass keine Verunreinigungen in den Meßkanal 2 gelangen. Die Verbindungsöffnungen 17 sind beispielsweise rund, können aber eine beliebige Form haben.

Der Schwimmer 2 besteht aus einem Material, das eine geringere Dichte aufweist als die Flüssigkeit, so dass dieser durch den Auftrieb zumindest teilweise auf der Flüssigkeitsoberfläche schwimmt. Der Schwimmer 2 ist beispielsweise zylinderförmig ausgeführt.

Erfindungsgemäß ist der Schwimmer 2 über ein Federelement 11 zumindest mittelbar mit einem Sensor 12 verbunden, mittels dem der Füllstand im Behälter 1 durch Ermittlung einer mit der Dehnung des Federelementes 11 korrelierenden Meßgröße bestimmbar ist.

Die Meßgröße des Sensors 12 wird über eine Signalleitung 15 an ein elektronisches Steuergerät 16 geleitet, in dem eine Korrelation zwischen der Meßgröße des Sensors 12 und dem Füllstand 4 abgespeichert ist und das mittels dieser Korrelation einen Füllstand im Behälter 1 ermittelt.

Der Sensor 12 ist beispielsweise innerhalb des Meßkanals 2 angeordnet. Der Sensor 12 ist mit dem Federelement 11 mechanisch verbunden und beispielsweise an der Bodenwandung 9 des Behälters 1 vorgesehen, kann aber auch an einem nicht dargestellten Boden des Meßkanals 2 oder an einer Umfangswandung des Meßkanals 2 angeordnet sein.

Der Sensor 12 ist beispielsweise ein sogenannter Dehnungmeßstreifen (DMS), ein piezoelektrischer Sensor oder ein ähnlicher Sensor zur Kraft- oder Dehnungsmessung. Möglich ist auch, dass das Federelement 11 selbst der Sensor 12 ist und eine mit der Dehnung des Federelementes 11 korrelierende Meßgröße liefert.

Das Federelement 11 ist beispielsweise als Zugfeder ausgebildet. Das Federelement 11 kann aber prinzipiell auch eine Druckfeder sein, die mit einem an der Deckenwandung 10 angebrachten Sensor 12 wirkverbunden ist. Bei der Ausführung des Federelementes 11 als Druckfeder muss jedoch zur Bestimmung des Füllstandes 4 in dem Steuergerät 16 eine vom Füllstand des Behälters 1 abhängige Durchbiegung der Bodenwandung 9 berücksichtigt werden. Das Federelement 11 besteht aus einem korrosionsbeständigen Material, das seine Federeigenschaften über eine vorbestimmte Lebensdauer aufrechterhält, so dass möglichst keine Alterungseinflüsse des Federelementes 11 das Messergebnis beeinflussen. Das Federelement 11 ist beispielsweise eine Schraubenfeder.

Der Schwimmer 3 bewegt sich mit steigendem Füllstand 4 im Behälter 1 im Meßkanal 2 weiter nach oben in Richtung der Deckenwandung 10 und dehnt das Federelement 11 zunehmend. Je höher der Füllstand 4 im Behälter 1 ist, desto größer ist die axiale Dehnung bzw. der Federweg des Federelementes 11 und desto größer ist die Federkraft des Federelementes 11. Die Federkraft des Federelementes 11 wirkt entgegen der auf den Schwimmer 3 wirkenden Auftriebskraft. Die mit der Dehnung des Federelementes 11 korrelierende Federkraft wird auf den Sensor 12 übertragen und vom Sensor 12 direkt oder indirekt detektiert.

Das Federelement 11 ist beispielsweise derart weich ausgelegt, dass die Auftriebskraft auch bei maximalem Füllstand 4 größer ist als die Federkraft, so dass der Schwimmer 3 nicht von dem Federelement 11 unter dem Flüssigkeitsspiegel 5 gehalten wird.

Mit sinkendem Füllstand 4 bewegt sich der Schwimmer 3 im Meßkanal 2 in Richtung der Bodenwandung 9 und entlastet das Federelement 11.

## Patentansprüche

1. Vorrichtung zur Messung eines Füllstandes in einem Behälter, mit einem Meßkanal, in dem ein Schwimmer axial beweglich gelagert ist, **dadurch gekennzeichnet, dass** der Schwimmer (3) über ein Federelement (11) zumindest mittelbar mit einem Sensor (12) verbunden ist, mittels dem der Füllstand (4) durch Ermittlung einer mit der Dehnung des Federelementes (11) korrelierenden Meßgröße bestimmbar ist.

2. Vorrichtung nach Anspruch 1, **dadurch gekennzeichnet, dass** der Sensor (12) als ein Dehnungsmeßstreifen oder als ein piezoelektrischer Sensor ausgeführt ist.

3. Vorrichtung nach Anspruch 1, **dadurch gekennzeichnet, dass** der Sensor (12) an einer Bodenwandung (9) des Behälters (1) oder am Meßkanal (2) angeordnet ist.

4. Vorrichtung nach Anspruch 1, **dadurch gekennzeichnet, dass** der Sensor (12) in dem Meßkanal (2) angeordnet ist.

5. Vorrichtung nach Anspruch 1, **dadurch gekennzeichnet, dass** das Federelement (11) eine Zugfeder oder eine Druckfeder ist.

6. Vorrichtung nach Anspruch 1, **dadurch gekennzeichnet, dass** das Federelement (11) eine Schraubenfeder ist.

7. Vorrichtung nach Anspruch 1, **dadurch gekennzeichnet, dass** der Meßkanal (2) über zumindest zwei Verbindungsöffnungen (17) mit dem Behälter (1) strömungsverbunden ist.

8. Vorrichtung nach Anspruch 1, **dadurch gekennzeichnet, dass** die Meßgröße des Sensors (12) mittels eines elektronischen Steuergerätes (16) in einen Füllstand umrechenbar ist.
